# EUROPEAN PATENT SPECIFICATION

(11) **EP 4 369 912 B1**
(45) Date of publication and mention of the grant of the patent: **07.05.2025**
(21) Application number: 22786980.7
(22) Date of filing: 12.08.2022
(51) Int. Cl.: A01J 5/007, A01J 7/00, A01J 5/02

(54) **STIMULATION SYSTEM FOR COW'S UDDER**
STIMULATIONSSYSTEM FÜR KUHEUTER
SYSTÈME DE STIMULATION DE PIS DE VACHE

(30) Priority: 12.08.2021 LT 2021542
(43) Date of publication of application: 22.05.2024
(73) Proprietor: Kaunas University of Technology, 44249 Kaunas (LT); Lithuanian University of Health Sciences, 44307 Kaunas (LT)
(72) Inventor: BUBULIS, Algimantas, 50283 Kaunas (LT); JURENAS, Vytautas, 44147 Kaunas (LT); VEZYS, Joris, 49240 Kaunas (LT); SEDEREVICIUS, Antanas, 47102 Kaunas (LT); ZELVYTE, Rasa, 48308 Kaunas (LT); ZYMANTIENE, Judita, 47187 Kaunas (LT); OBERAUSKAS, Vaidas, 48390 Kaunas (LT); MUSAYEVA, Kristina, 50199 Kaunas (LT); ZEMAITIS, Juozas, 71313 Sakiu distr. (LT)
(74) Representative: AAA Law
(86) International application number: PCT/IB2022/057530
(87) International publication number: WO 2023/017471

(56) References cited:
- EP-B1- 3 171 907
- US-A- 4 011 838
- US-A- 5 769 024
- US-A1- 2004 168 646
- US-A1- 2008 257 266

## Description

### Technical Field

The present invention, as set out in the appended claims, generally belongs to the field of agriculture, specifically, to veterinary medicine and relates to cow's udder stimulation devices and associated controlling methods.

### Background art

Currently, worldwide cow milking equipment mainly uses pneumatic teat cups that are mechanically attached to teats of the cow's udder, where milk is collected in an automated manner. For various objective and subjective reasons, inflammatory processes occur in the teats and udders of cows, i.e. mastitis, as a result of which the milk becomes unsuitable for consumption. Various technical and medicinal measures are used to treat mastitis, but they only partially eliminate inflammatory processes.

There are known devices that act on the udder with acoustic or electromagnetic waves of a certain frequency. Due to this effect the aforementioned inflammatory processes can be prevented or suppressed.

The Russian Federation RU 2644826 patent describes a method for treatment/prophylactics of cow mastitis and a device for its implementation. Prophylactic treatment of cow mastitis and stimulation of lactation is carried out by applying a pulsed frequency-resonant electromagnetic field (frequency 27MHz) to the cow's udder, through high-frequency generators attached to the cow's udder on both sides. Such a solution only partially reduces inflammatory processes depending on selected frequency range. It also greatly complicates cow's ability to move and lie down. With this device, the cow's udder is affected from 6 to 48 hours. There is a known device based on acoustic pulse technology (APT) Armenta Ltd., described in publication by Wang C.,J, Schaden W.Ko J-Y: Shockwave Medicine, Transl Res Biomed. Basel, Karger, 2018,vol.6, pp. 107-108., which describes a method and device for treating mastitis in cows using shock acoustic wave technology. The device consists of a self-contained mobile acoustic pulse generation system that delivers acoustic pulses through a waveguide to an acoustic wave diffuser that is attached to the cow's udder. Thus, therapeutic prevention of mastitis is carried out.

The disadvantages of both mentioned prototypes are that the devices for this purpose and the elements of their attachment to the cow's udder are complex and the vibrations caused by them, by their nature, spread over a wide area and interfere with milking. In addition, their operation is not compatible with milking process since duration of it is much longer than milking time. It is also known that cows react very sensitively to environmental stimuli which negatively affects amount of milk produced. Documents US 2008/257266 and US 2004/168646 both disclose known automatic milking systems.

The present invention is dedicated to overcoming of the above shortcomings of the prior art.

### Summary

The present description pertains to a cow's udder stimulation system comprising a teat cup vacuum-mounted on a cow's udder teat and a transducer for vacuum delivery to the teat cup, a low-frequency mechanical vibration actuator mounted on the teat cup, and the actuator controller that is coupled to the vacuum delivery transducer. The system generates low-frequency vibrations that affect a teat through the teat cup, and through it the entire udder. The system preferably comprises four teat cups, each with an attached low-frequency mechanical vibration actuator, which are coupled to one transducer for vacuum delivery to the teat cup and one actuator controller. The system allows to activate blood circulation in an flow of the udder, thus increasing milk release during milking and has a physiotherapeutic effect, and reduces inflammatory processes in the udder, i.e. causation of mastitis.

### Short Description of Drawings

The present invention is as defined in the appended claims.

The invention may be best understood from the following detailed description in which exemplary embodiments are given in conjunction with the accompanying drawing, where:

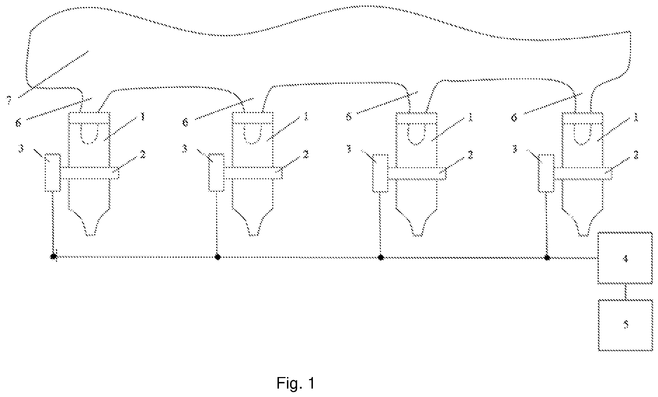

Fig. 1 shows a schematic diagram of the teat cups and vibrostimulation actuator system for cow's udder.

### Detailed description

It should be understood that numerous specific details are presented in order to provide a complete and comprehensible description.

However, the person skilled in art will understand that the embodiment examples do not limit the application. Well-known methods, procedures and components have not been described in detail for the embodiment to avoid misleading.

Although exemplary embodiments according to the present description, or aspects thereof, as illustrated and described, include many components that are depicted in a particular common space or location, some components may also be remote. It should also be understood that the examples given are not limited to the components described, but also include other elements required for their functioning and interaction with other components, the existence of which is self-explanatory and therefore not detailed.

The system according to the invention and as shown in the drawing Fig. 1, comprises a teat cup (1) adapted to vacuum milk from the udder (7) through the teat (6), when the teat cup (1) is mounted on the teat (6). The system also includes a vibrostimulation vibration actuator (3), which is fixed on the body of the teat cup (1) in such a way as to transmit mechanical vibrations of the vibrostimulation actuator (3) to the teat (6) in direct contact with the body of the teat cup (1) or through a holder ring (2) and the udder (7). The vibrostimulation vibration actuator (3) is controlled by the controller (4), which controls the vibrostimulation vibration actuator (3) according to the signal of the vacuum delivery transducer (5), which creates vacuum in the teat cup (1).

The teat cup (1) can be any standard teat cup of a conventional milking system, which is designed to vacuum milk from the udder (7) through the teat (6). Such teat cup (1) comprises at least a body and an inner part which is adapted to fit over the teat of a cow's udder and substantially conforms to the shape of the teat of a cow's udder. Such a teat cup (1) is connected to the milking system through a hose for creating a vacuum in the teat cup and a hose for extracting milk.

The vibrostimulation vibration actuator (3), which excites low frequency is a generator of mechanical vibrations (waves) that generates harmonic mechanical vibrations, comprises a DC micromotor with an unbalanced rotor are rigidly fixed to the holder ring (2). of conventional design, wherein on its axis of motion, for transmission to other objects, an unbalanced element is rigidly fixed.

The holder ring (2) for attaching the vibrostimulation vibration actuator (3) to the teat cup (1) is preferably shaped to match the circumference of the teat cup (1) body. The holder ring (2), on which the actuator (3) is fixed, is put on the teat cup (1) so that it is positioned as close as possible to the udder, it is rigidly attached to the teat cup (1), the inner surface of the holder ring (2) fits completely to the teat cup (1) outer surface of the body. Thus, the transmission of vibrations from the vibrostimulation vibration actuator (3) through the teat cup (1) to the teat (6) and the udder (7) is ensured. The holder ring (2) can also be used to surround the vibrostimulation vibration actuator (3) and the body of the teat cup (1), rigidly and without gap, pressing the body of the vibrostimulation vibration actuator (3) to the body of the teat cup (1). Thus, the transmission of vibrations from the vibrostimulation vibration actuator (3) through the teat cup (1) to the teat (6) and the udder (7) is ensured.

Before the milking process, the teat cup (1) with the vibrostimulating vibration actuator (3) attached to it is put on the cow's udder (7). The vibrostimulation actuator (3) can also be pressed to the body of the teat cup (1) with the holder ring (2). The vibrostimulation vibration actuator (3) is preferably mounted on the upper part of the end of the body of the teat cup (1), which is close to the end through which the teat cup (1) is put on the teat (6). During the milking process, the vacuum is delivered from the milking system's vacuum delivery to the teat cup (1) transducer (5) through the hose to the teat cup (1). The teat cup (1) is clamped around the teat (6) and the milk is extracted from the cow's udder (7). The milk is taken away through the milk drain hose. At the same time, the vacuum delivery to the teat cup (1) transducer (5) activates the controller (4), which activates the vibrostimulation vibration actuator (3). The vibrostimulation vibration actuator (3) is started and stopped synchronously with the milking process, since it is only operated during the milking of the cow.

It is preferable that four teat cups (1) are each equipped with a separate vibrostimulation vibration actuator (3) and connected to one vacuum delivery transducer (5) and controller (4) at the same time. All four teat cups (1) with cow's udder stimulation system work similarly as described above.

Such installation of vibrostimulation vibration actuators (3) and stimulation excitation of the teat cups (1) during the milking process causes vibrations in the udder (7) and at the same time activates it, allowing activation of blood circulation in the udder (7), which increases milk release during milking and has a physiotherapy effect, reducing inflammatory processes i.e. causation of mastitis.

The present invention is set out in the claims that follow.

## Claims

1. Stimulation system for cow's udder, the system comprising at least one teat cup (1), a controller (4), a vacuum delivery to teat cup transducer (5), at least one vibration generating stimulating source (3), and means (1) for transmitting vibrations generated by the stimulation source (3) to cow's udder (7), wherein the vibration generating stimulation source (3) is a vibrostimulation vibration actuator (3) configured to generate mechanical vibrations and rigidly connected to the at least one teat cup (1) for transmitting the generated vibrations to cow's udder (7), wherein the vibrostimulation vibration actuator (3) is connected to the controller (4) and the vacuum delivery to teat cup transducer (5), wherein the vibrostimulation vibration actuator (3) is configured to receive a control signal from the controller (4) after the controller (4) receives signal from the vacuum delivery to teat cup transducer (5) wherein the vibrostimulation vibration actuator (3) is mounted on upper part of the end of the teat cup (1), through which the teat cup (1) is put on a teat (6).

2. Stimulation system for cow's udder according to claim 1, comprising four vibrostimulation vibration actuators (3) rigidly connected to respectively four separate teat cups (1) for transmitting generated vibrations to cow's udder (7), where the vibrostimulation vibration actuators (3) are connected to the controller (4) and the vacuum delivery to teat cup transducer (5) so that the vibrostimulation vibration actuators (3) receive the control signal from the controller (4) after the controller (4) receives signal from the vacuum delivery to teat cup transducer (5).

3. A method for controlling the stimulation system for cow's udder according to **any** of claims 1 or 2, wherein all vibrostimulation vibration actuators (3) of the cow's udder (7) stimulation system are started and stopped synchronously with milking process, where the vibrostimulation vibration actuator (3) receives a control signal from a controller (4) after the controller (4) receives signal from a vacuum delivery to teat cup transducer (5), and where the vibrostimulation vibration actuator (3) is inducing vibrations on upper part of end of the teat cup (1) through which a teat cup (1) is put on a teat (6).

## Patentansprüche

1. Stimulationssystem für Kuheuter, wobei das System zumindest einen Zitzenbecher (1), eine Steuerung (4), einen Geber (5) zum Bereitstellen von Vakuum an Zitzenbecher, zumindest eine Vibrationserzeugungsstimulationsquelle (3) und Mittel (1) zum Übertragen von Vibrationen umfasst, die von der Stimulationsquelle (3) erzeugt werden, an ein Kuheuter (7), wobei die Vibrationserzeugungsstimulationsquelle (3) ein Vibrostimulationsvibrationsaktuator (3) ist, der dazu ausgestaltet ist, mechanische Vibrationen zu erzeugen, und der starr mit dem zumindest einen Zitzenbecher (1) verbunden ist, um die erzeugten Schwingungen an ein Kuheuter (7) zu übertragen, wobei der Vibrostimulationsvibrationsaktuator (3) mit der Steuerung (4) und dem Geber (5) zum Bereitstellen von Vakuum an Zitzenbecher verbunden ist, wobei der Vibrostimulationsvibrationsaktuator (3) dazu ausgestaltet ist, ein Steuerungssignal von der Steuerung (4) zu empfangen, nachdem die Steuerung (4) ein Signal von dem Geber (5) zum Bereitstellen von Vakuum an Zitzenbecher empfangen hat, wobei der Vibrostimulationsvibrationsaktuator (3) an einem oberen Teil des Endes des Zitzenbechers (1) befestigt ist, durch den der Zitzenbecher (1) an eine Zitze (6) angelegt wird.

2. Stimulationssystem für Kuheuter nach Anspruch 1, das vier Vibrostimulationsvibrationsaktuatoren (3) umfasst, die starr mit jeweils vier getrennten Zitzenbechern (1) verbunden sind, um erzeugte Vibrationen auf ein Kuheuter (7) zu übertragen, wobei die Vibrostimulationsvibrationsaktuatoren (3) mit der Steuerung (4) und dem Geber (5) zum Bereitstellen von Vakuum an Zitzenbecher verbunden sind, so dass die Vibrostimulationsvibrationsaktuatoren (3) das Steuerungssignal von der Steuerung (4) empfangen, nachdem die Steuerung (4) ein Signal von dem Geber (5) zum Bereitstellen von Vakuum an Zitzenbecher empfangen hat.

3. Verfahren zum Steuern des Stimulationssystems für Kuheuter nach einem der Ansprüche 1 oder 2, wobei alle Vibrostimulationsvibrationsaktuatoren (3) des Stimulationssystems für Kuheuter (7) synchron mit dem Melkprozess gestartet und gestoppt werden, wobei der Vibrostimulationsvibrationsaktuator (3) ein Steuerungssignal von einer Steuerung (4) empfängt, nachdem die Steuerung (4) ein Signal von einem Geber (5) zum Bereitstellen von Vakuum an Zitzenbecher empfangen hat, und wobei der Vibrostimulationsvibrationsaktuator (3) Vibrationen an einem oberen Teil eines Endes des Zitzenbechers (1) induziert, durch den ein Zitzenbecher (1) an eine Zitze (6) angelegt wird.

## Revendications

1. Système de stimulation de pis de vache, le système comprenant au moins un gobelet trayeur (1), un contrôleur (4), un transducteur de distribution sous vide au gobelet trayeur (5), au moins une source de stimulation génératrice de vibrations (3), et un moyen (1) pour transmettre les vibrations générées par la source de stimulation (3) au pis de la vache (7), dans lequel la source de stimulation génératrice de vibrations (3) est un actionneur de vibrations de vibrostimulation (3) configuré pour générer des vibrations mécaniques et relié de manière rigide à l'au moins un gobelet trayeur (1) pour transmettre les vibrations générées au pis de vache (7), dans lequel l'actionneur de vibration de vibrostimulation (3) est connecté au contrôleur (4) et au transducteur de distribution sous vide au gobelet trayeur (5), dans lequel l'actionneur de vibration de vibrostimulation (3) est configuré pour recevoir un signal de commande depuis le contrôleur (4) après que le contrôleur (4) ait reçu le signal depuis le transducteur de distribution sous vide au gobelet trayeur (5) dans lequel l'actionneur de vibration de vibrostimulation (3) est monté sur la partie supérieure de l'extrémité du gobelet trayeur (1), à travers lequel le gobelet trayeur (1) est placé sur un trayon (6).

2. Système de stimulation de pis de vache selon la revendication 1, comprenant quatre actionneurs de vibration de vibrostimulation (3) reliés de manière rigide à respectivement quatre gobelets trayeurs séparés (1) pour la transmission des vibrations générées au pis de vache (7), les actionneurs de vibration de vibrostimulation (3) sont connectés au contrôleur (4) et au transducteur de distribution sous vide au gobelet trayeur (5) de sorte que les actionneurs de vibration de vibrostimulation (8) reçoivent le signal de commande depuis le contrôleur (4) après que le contrôleur (4) a reçu le signal depuis le transducteur de distribution sous vide au gobelet trayeur (5).

3. Procédé de commande du système de stimulation de pis de vache selon l'une quelconque des revendications 1 ou 2, dans lequel tous les actionneurs de vibration de vibrostimulation (3) du système de stimulation de pis de vache (7) sont mis en marche et arrêtés de manière synchronisée avec le processus de traite, où l'actionneur de vibration de vibrostimulation (3) reçoit un signal de commande d'un contrôleur (4) après que le contrôleur (4) a reçu le signal du transducteur de distribution sous vide au gobelet trayeur (5), et où l'actionneur de vibration de vibrostimulation (3) induit des vibrations sur la partie supérieure de l'extrémité du gobelet trayeur (1) par lequel un gobelet trayeur (1) est placé sur un trayon (6).
